# EUROPEAN PATENT SPECIFICATION

(11) **EP 4 488 451 B1**
(45) Date of publication and mention of the grant of the patent: **16.09.2026**
(21) Application number: 24184173.3
(22) Date of filing: 25.06.2024
(51) Int. Cl.: E02F 3/30, B66C 23/70, F16C 29/02, F16C 29/04, F16C 29/12, F16C 33/20

(54) **WORK VEHICLE WITH TELESCOPIC ARM, IN PARTICULAR A TELEHANDLER**
ARBEITSFAHRZEUG MIT TELESKOPISCHEM ARM, INSBESONDERE TELELADER
ENGIN DE TRAVAIL À BRAS TÉLESCOPIQUE, NOTAMMENT TÉLÉMANIPULATEUR

(30) Priority: 28.06.2023 IT 202300013413
(43) Date of publication of application: 08.01.2025
(73) Proprietor: CNH Industrial Italia S.p.A., 10156 Torino (IT)
(72) Inventor: GARRAMONE, Adriano, 10156 Turin (IT); DELL'AQUILA, Pietro, 10156 Turin (IT)
(74) Representative: CNH Industrial IP Department

(56) References cited:
- CN-A- 102 659 034
- GB-A- 1 387 563
- US-A- 3 688 930
- US-A- 5 267 824
- US-A- 5 515 654
- US-A1- 2007 230 947
- US-A1- 2013 183 028

## Description

### Field of the invention

The present invention relates to the field of work vehicles with telescopic arm such as telehandler.

### State of the art

Telescopic arms are widely used in the field of work machines, especially in mining companies, where the telescopic work arm plays an important role in the field of material loading operations.

Telescopic arms are also used in firefighting vehicles for rescuing people.

The arm comprises a plurality of interconnected segments, in which the first segment ES1 is hinged to the chassis of the work vehicle by means of a "constrained" end.

Vehicles are known in which the extendable arm comprises more than two segments, such as for example the so-called "telehandler" or "telescopic handler".

Examples are shown in US2007/230947A1, US2013/183028A1, US5515654A, US5267824A and CN102659034A.

In these work vehicles, the ability to extend the arm is an essential aspect, therefore, they can also include four or more segments, each of which is equipped with a hydraulic actuator that allows it to extend or retract with respect to the segment that precedes it.

A segment is fitted into another segment and sliding is facilitated by pads made of a very resistant material which guarantees excellent sliding to sliding parts such as Teflon^{™}.

The arms of telehandler vehicles are made with box-shaped elements with a rectangular section, so as to avoid any axial rotation between one segment and another and to satisfy particularly demanding tasks.

At least two of pads are arranged on the inner faces of the "free" end of the outer segment, at least further two pairs of pads are associated with the outer faces of the inner end of the inner segment.

The pads arranged on operationally vertical walls are used to support lateral swinging of the arm, for example, when the vehicle does not work on level ground, or when the load supported by the arm produces a twisting moment.

The pads arranged on the operatively horizontal walls are particularly stressed when the arm extends or retracts while supporting a load, in any operating condition.

This means that when one segment slides:
- the material of the horizontal pads is abraded and falls on the ground polluting it,
- the friction between the pads and the segment increases the effort required to extend and retract the segment, which results in an increase in the pressure of the hydraulic actuator which allows it to extend or retract. Furthermore, the pads, due to abrasion, must be replaced after a certain number of working hours, resulting in machine downtime and costs.

Unless specifically excluded in the detailed description that follows, what is described in this chapter is to be considered as an integral part of the detailed description.

### Summary of the invention

The object of the present invention is to propose a more telescopic arm in which the aforementioned problems are reduced.

According to the invention a work vehicle is provided having the features of claim 1. Further embodiments are defined by the dependent claims.

### Brief description of the figures

Further objects and advantages of the present invention will become clear from the detailed description that follows of an embodiment of the same (and of its variants) and from the annexed drawings given for purely explanatory and non-limiting purposes, in which:
Fig. 1 shows an example of a work vehicle equipped with a telescopic arm with a rectangular section;
Figs. 2 and 3 show a longitudinal section according to a side view of the telescopic arm of Fig. 1, modified according to the present invention, respectively in a retracted configuration and in a partially extended configuration;
Fig. 4 shows a perspective view of a portion of the arm of Figs. 2 and 3;
Fig. 5 shows another perspective view of a detail of the arm portion of Fig. 4;
Figs. 6 and 7 show a detail of another portion of the arm of Figs. 2 and 3 according to two perspective and axial views, respectively;
Fig. 8 shows a component present both in the portion of the arm of Fig. 4 and in the portion of the arm of Figs. 6 and 7;
Fig. 9 shows an axial view of the portion of the arm of Figs. 4 and 5;
Figs. 10 - 12 show a preferred variant of the invention which provides for the connection of the component of Fig. 8 according to a floating configuration.

The same reference numbers and letters in the figures identify the same elements or components or functions.

It should also be noted that the terms "first", "second", "third", "superior", "inferior" and the like may be used herein to distinguish various items. These terms do not imply a spatial, sequential, or hierarchical order for the modified items unless specifically indicated or inferred from the text.

### Detailed description

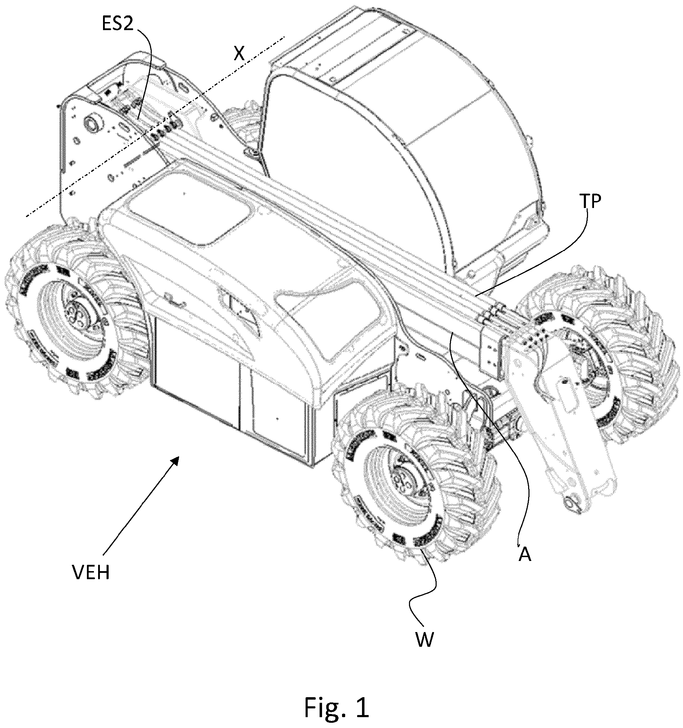

Fig. 1 shows a vehicle VEH equipped with a telescopic arm A, hinged to the vehicle chassis, so that the arm can be raised and lowered.

The vehicle is equipped with wheels W, but may be equipped with tracks.

The vehicle is a so-called telehandler, equipped with an extendable arm A with a tubular and rectangular cross-section, intended for lifting loads.

The arm may consist of two or more segments, one inside the other, which extend according to a predetermined pattern of extension.

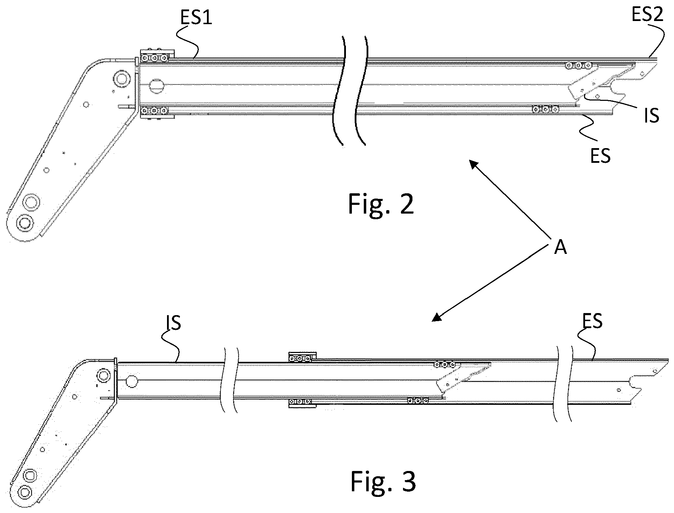

Fig. 2 shows a longitudinal section of the telescopic arm of the present invention.

The arm comprises an external segment ES and an internal segment IS, in particular, in Fig. 2, the internal segment IS is completely inserted in the external segment ES.

Fig. 3, on the other hand, shows a longitudinal section of the telescopic arm in which the internal segment IS is partially extracted from the external segment ES defining a partially extended condition.

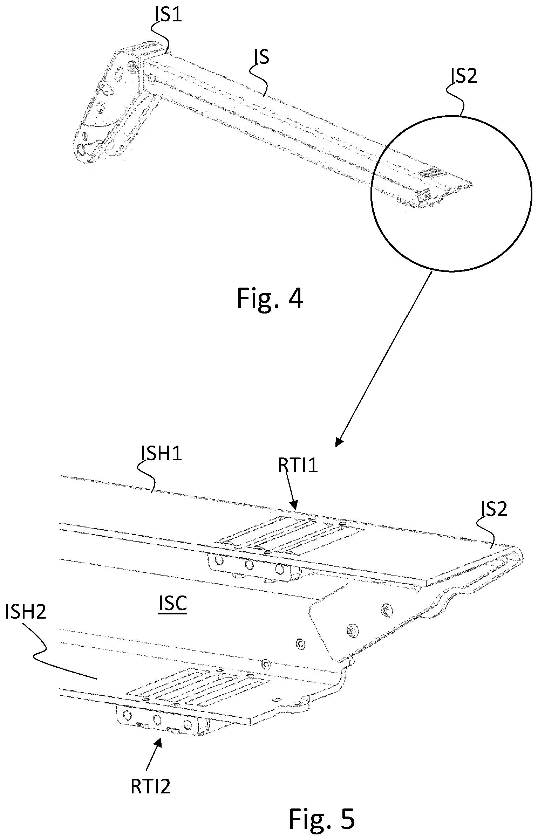

Fig. 4 shows a perspective view of the outer end IS1 and the inner end IS2 of the inner segment.

The internal end IS2 is referred to as "internal end", as it is intended, under operating conditions, to always be within the external segment. It is accessible and visible only when the arm is disassembled.

On the contrary, the external end IS1 is referred to as "external end", as it always remains visible and accessible, regardless of the relative operating condition. Fig. 5 shows a perspective view of the same internal end IS2 with the side facing the observer in transparency.

An upper roller train RTI1 and a lower roller train RTI2 are therefore clearly visible.

They are called upper and lower in relation to the fact that they are associated with the operatively horizontal upper ISH1 and lower walls ISH2 of the inner segment.

It is worth highlighting that the arm is hinged to the vehicle frame so that it can rotate around a horizontal axis X, i.e. parallel to the vehicle's support ground and the horizontal walls are parallel to the hinge axis. Therefore, it is immediate to identify the horizontal walls of each segment, since all segments have a rectangular tubular section.

The upper roller set RTI1 is associated with the upper horizontal wall ISH1 on the upper horizontal face of the internal cavity ISC of the internal segment. Suitable rectangular openings allow the rollers to face externally.

Conversely, according to the invention, the lower roller set RTI2 is associated with the lower horizontal wall ISH2 on the outer face. However, to limit the protrusion of the rollers, the lower horizontal wall ISH2 is equipped with rectangular openings in order to partially embed the rollers of the lower train in the relative segment.

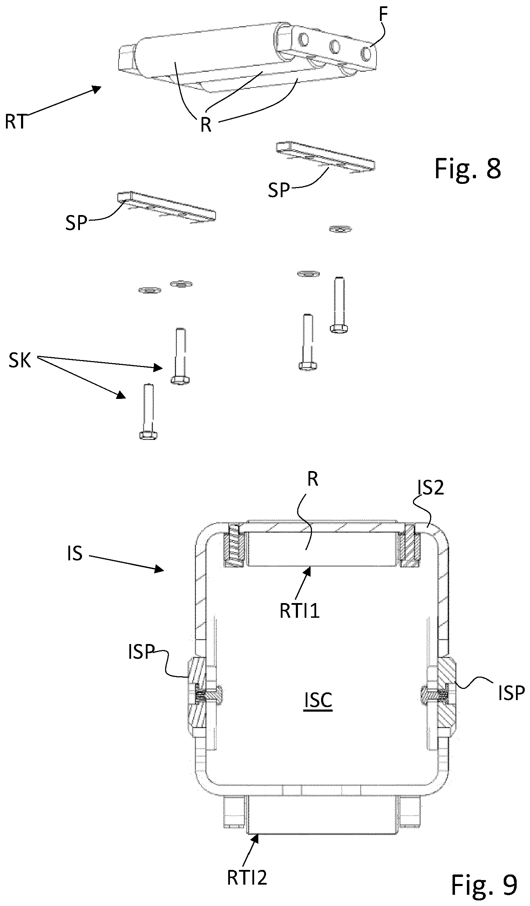

The internal end IS2 of the internal segment is equipped with at least one pair of lateral pads ISP, i.e. associated externally to the vertical walls, so as to allow the reciprocal movement of the internal segment with respect to the relative external segment even in heeling conditions. Such pads can be better seen in Fig. 9.

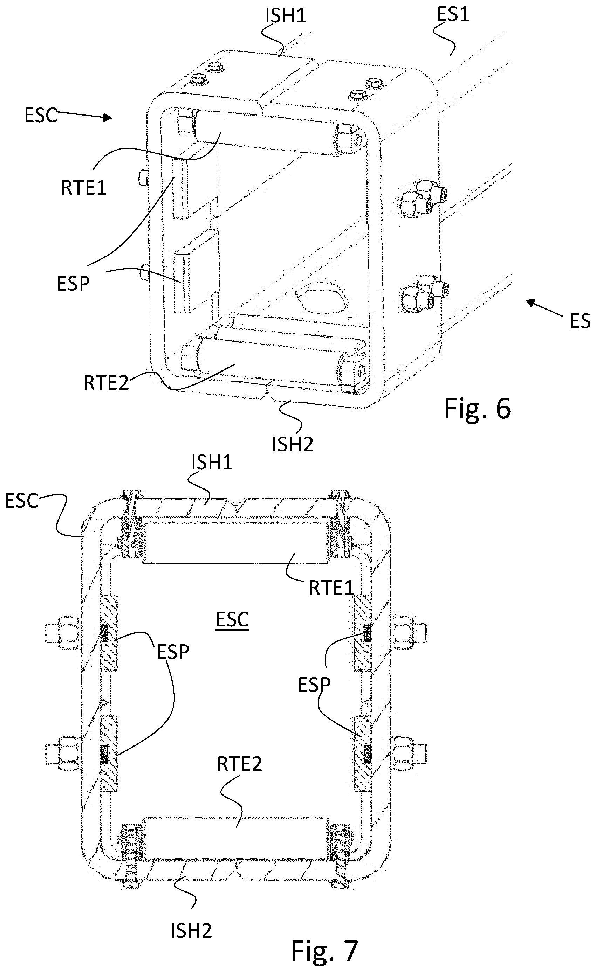

With reference to Figs. 6 and 7, the free end ES1 of the outer segment ES is shown. This end is referred to as "free", in contrast with the relative opposite end ES2 "constrained", as it is hinged to the vehicle chassis.

The free end ES1 includes a sort of collar ESC which has the purpose of structurally reinforcing the portion of the segment most stressed by the internal segment.

The collar ESC comprises two portions, left and right, permanently fixed to the free end of the segment.

The collar supports an upper roller set RTE1 and a lower roller set RTE2. Both upper and lower trains are supported in the inner faces of the collar ESC. Therefore, with the roller trains associated with the internal segment and the roller trains associated with the external segment it is possible to allow the reciprocal sliding of the two segments between the extended condition and the retracted condition and vice versa. Naturally, also in this case the collar supports at least one pair of pads ESP associated internally with the vertical walls of the collar.

According to a preferred aspect of the present invention, the roller trains comprise at least one pair of rollers R maintained parallel to each other by a pair of perforated plates F parallel to each other, perforated so as to support the axes of the rollers.

Preferably, the fastening of the roller trains is achieved through the perforated plates F, by means of through holes transverse to the support holes of the rollers.

More preferably, spacers SP are interposed between the perforated plates F and the segment or collar with which they are intended to be associated, which allow for the clearance to be recovered.

Advantageously:
- the wear of the rollers is much lower than that of the pads, their useful life is greater than that of the machine and therefore they do not need to be replaced, thus reducing maintenance times and therefore machine downtime,
- the rollers do not pollute because they are not abraded during their use,
- they decrease the effort required to extend and retract the arm, as the rolling friction between the rollers and the segment is less than the sliding friction between the pads and the segment.

It should be noted that with regard to the internal segment, preferably one roller train is fixed externally and one internally with respect to the cavity ISC of the tubular section defined by the segment.

However, it is possible to envisage that both trains may be fixed externally or internally in relation to the dimensions of the cavity of the external segment with respect to the dimensions of the internal segment.

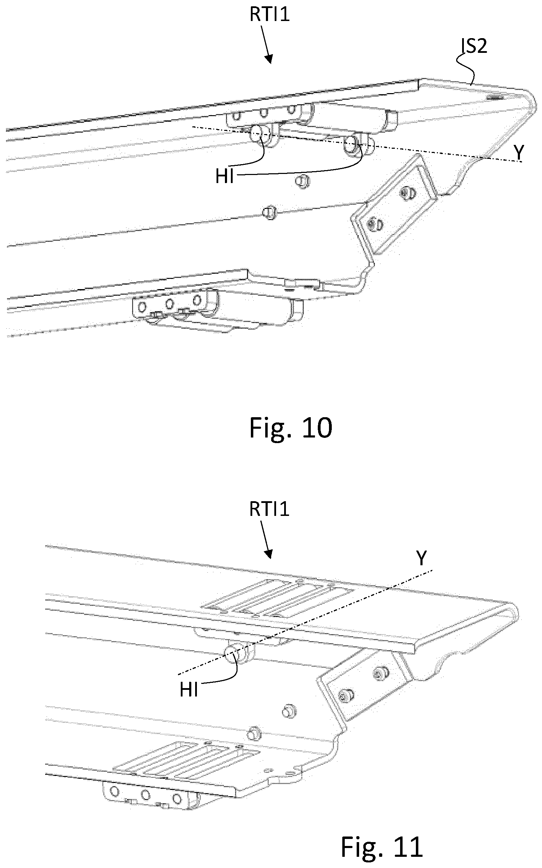

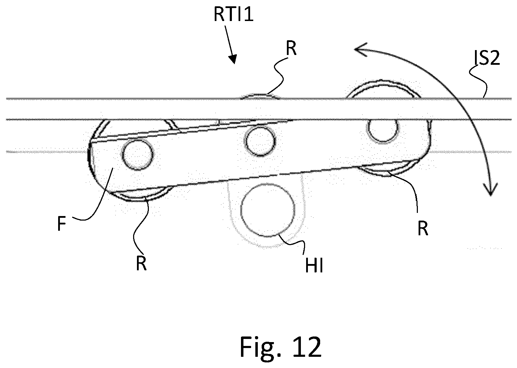

According to the preferred variant of Figs. 10-12, the roller train of the inner end IS2 of the inner segment IS is associated with a relative segment by means of a hinge (HI) arranged so as to allow the roller train to tilt along an axis (Y) parallel to the hinge axis (X) of the telescopic arm.

Advantageously, this solution makes it possible to maintain the distribution of forces on all the rollers of the train even when the internal segment is completely extracted from the external segment.

The fact that the roller set is associated in the segment cavity is not essential, as the same principle can be applied to the lower roller set RTI2.

According to a preferred aspect of the invention, the ESP and ISP pads are made with a biocompatible material such as bioplastic, ensuring acceptable performance for pads associated with the vertical walls of the segments.

Another advantage of the present invention, in this case, is that of eliminating the dispersion of microplastics with the use of pads in biocompatible materials on vertical walls and roller trains on horizontal walls.

In fact, the pads subject to greater wear are those associated with the horizontal walls, which in the present invention are replaced by roller trains.

The scope of the invention is defined by the appendend claims.

## Claims

1. Work vehicle (VEH) comprising a telescopic arm (A) equipped with at least one external segment (ES) and an internal segment (IS) suitable for inserting axially in the external segment, wherein both segments have a tubular shape with a rectangular cross-section, and wherein the external segment has a first end (ES2) hinged to the vehicle to raise and lower according to a hinge axis (X) and wherein said rectangular cross-section defines horizontal walls, parallel to said hinge axis, and wherein to said horizontal walls roller trains are associated to reduce frictions during a procedure of extension or retraction of the telescopic arm;
wherein said internal segment (IS) comprises an internal end (IS2) with respect to said external segment, and wherein a first roller train (RTI1) is associated with a first horizontal wall (ISH1) and a second roller train (RTI2) is associated with a second horizontal wall (ISH2), opposite to the first one said vehicle is **characterized in that** said second roller train (RTI2) is associated with an outer face of said second horizontal wall (ISH2) and wherein said second horizontal wall (ISH2) comprises rectangular openings for partially embedding the rollers (R) of the second roller train (RTI2).

2. Vehicle according to claim 1, wherein said first set of rollers is associated with an inner face of said first horizontal wall (ISH1) and wherein said first horizontal wall includes rectangular openings through which said rollers (R) of the first roller train (RTI1) project.

3. Vehicle according to any one of the preceding claims, wherein said external segment (ES) comprises a free end (ES1) comprising a first (RTE1) and a second roller train (RTE2) associated on the internal faces of a relative first and second horizontal walls (ISH1,ISH2).

4. The vehicle of claim 3 wherein said free end comprises a reinforcing collar (ESC) adapted to support said first and second sets of rollers.

5. Vehicle according to any one of the preceding claims, wherein each roller train (RTE1, RTE2, RTI1, RTI2) comprises a pair of perforated plates (F) parallel to each other, perforated so as to support axes of the rollers.

6. Vehicle according to any one of the preceding claims, wherein at least one roller train is associated with a relative segment, by means of a spacer (SP) able to adjust plays.

7. Vehicle according to any one of the preceding claims, wherein at least one roller train is associated with a relative segment by means of a hinge (HI) arranged so as to allow the roller train to tilt according to an axis (Y) parallel to the hinge axis (X) of the telescopic arm.

8. Vehicle according to any one of the preceding claims, wherein said roller trains are associated with horizontal walls of the inner and outer segment and in which pads (ESP, ISP) are associated with corresponding vertical walls of the inner and outer segment.

9. Vehicle according to claim 8, wherein said pads are associated with said vertical walls in transverse sections passing through at least one respective roller train.

10. Vehicle according to any one of the preceding claims, comprising at least one hydraulic actuator for controlling a reciprocal position between at least two segments defining the arm (A).

## Patentansprüche

1. Arbeitsfahrzeug (VEH), umfassend einen Teleskoparm (A), der mit mindestens einem äußeren Segment (ES) und einem inneren Segment (IS), das zum axialen Einführen in das äußere Segment geeignet ist, ausgestattet ist, wobei beide Segmente eine Rohrform mit einem rechteckigen Querschnitt aufweisen und wobei das äußere Segment ein erstes Ende (ES2) aufweist, das an dem Fahrzeug drehbar angebracht ist, um sich gemäß einer Scharnierachse (X) zu heben und zu senken, und wobei der rechteckige Querschnitt horizontale Wände definiert, die parallel zu der Scharnierachse sind, und wobei den horizontalen Wänden Rollenbahnen zugeordnet sind, um Reibungen während eines Vorgangs des Ausfahrens oder Einfahrens des Teleskoparms zu verringern;
wobei das innere Segment (IS) ein inneres Ende (IS2) in Bezug auf das äußere Segment umfasst und wobei eine erste Rollenbahn (RTI1) einer ersten horizontalen Wand (ISH1) zugeordnet ist und eine zweite Rollenbahn (RTI2) einer zweiten horizontalen Wand (ISH2) zugeordnet ist, die der ersten gegenüberliegt, wobei das Fahrzeug **dadurch gekennzeichnet ist, dass** die zweite Rollenbahn (RTI2) einer Außenfläche der zweiten horizontalen Wand (ISH2) zugeordnet ist, und wobei die zweite horizontale Wand (ISH2) rechteckige Öffnungen zum teilweisen Einbetten der Rollen (R) der zweiten Rollenbahn (RTI2) umfasst.

2. Fahrzeug nach Anspruch 1, wobei der erste Rollensatz einer Innenfläche der ersten horizontalen Wand (ISH1) zugeordnet ist und wobei die erste horizontale Wand rechteckige Öffnungen einschließt, durch die die Rollen (R) der ersten Rollenbahn (RTI1) hindurchragen.

3. Fahrzeug nach einem der vorstehenden Ansprüche, wobei das externe Segment (ES) ein freies Ende (ES1) umfasst, das eine erste (RTE1) und eine zweite Rollenbahn (RTE2) umfasst, die den Innenflächen einer jeweiligen ersten und zweiten horizontalen Wand (ISH1, ISH2) zugeordnet sind.

4. Fahrzeug nach Anspruch 3, wobei das freie Ende einen Verstärkungskragen (ESC) umfasst, der dazu ausgebildet ist, den ersten und zweiten Rollensatz zu stützen.

5. Fahrzeug nach einem der vorstehenden Ansprüche, wobei jede Rollenbahn (RTE1, RTE2, RTI1, RTI2) ein Paar perforierter Platten (F) parallel zueinander umfasst, die perforiert sind, um Achsen der Rollen zu tragen.

6. Fahrzeug nach einem der vorstehenden Ansprüche, wobei mindestens eine Rollenbahn einem relativen Segment mittels eines Abstandshalters (SP) zugeordnet ist, der in der Lage ist, Spiele zu justieren.

7. Fahrzeug nach einem der vorstehenden Ansprüche, wobei mindestens eine Rollenbahn einem jeweiligen Segment mittels eines Scharniers (HI) zugeordnet ist, das angeordnet ist, um der Rollenbahn zu ermöglichen, sich gemäß einer Achse (Y) parallel zu der Gelenkachse (X) des Teleskoparms zu neigen.

8. Fahrzeug nach einem der vorstehenden Ansprüche, wobei die Rollenbahnen horizontalen Wänden des inneren und äußeren Segments zugeordnet sind und in dem Beläge (ESP, ISP) entsprechenden vertikalen Wänden des inneren und äußeren Segments zugeordnet sind.

9. Fahrzeug nach Anspruch 8, wobei die Beläge den vertikalen Wänden in Querschnitten zugeordnet sind, die durch mindestens eine jeweilige Rollenbahn verlaufen.

10. Fahrzeug nach einem der vorstehenden Ansprüche, umfassend mindestens einen hydraulischen Aktuator zum Steuern einer wechselseitigen Position zwischen mindestens zwei Segmenten, die den Arm (A) definieren.

## Revendications

1. Véhicule de travail (VEH) comprenant un bras télescopique (A) équipé d'au moins un segment externe (ES) et d'un segment interne (IS) adapté pour être inséré axialement dans le segment externe, dans lequel les deux segments ont une forme tubulaire comportant une section transversale rectangulaire, et dans lequel le segment externe a une première extrémité (ES2) articulée sur véhicule pour monter et descendre selon un axe d'articulation (X) et dans lequel ladite section transversale rectangulaire définit des parois horizontales, parallèles audit axe d'articulation, et dans lequel lesdites parois horizontales des trains de rouleaux sont associées pour réduire les frottements pendant une procédure d'extension ou de rétraction du bras télescopique ;
dans lequel ledit segment interne (IS) comprend une extrémité interne (IS2) par rapport audit segment externe, et dans lequel un premier train de rouleaux (RTI1) est associé à une première paroi horizontale (ISH1) et un second train de rouleaux (RTI2) est associé à une seconde paroi horizontale (ISH2) opposée à la première, ledit véhicule est **caractérisé en ce que** ledit second train de rouleaux (RTI2) est associé à une face extérieure de ladite seconde paroi horizontale (ISH2) et dans lequel ladite seconde paroi horizontale (ISH2) comprend des ouvertures rectangulaires pour l'encastrement partiel des rouleaux (R) du second train de rouleaux (RTI2).

2. Véhicule selon la revendication 1, dans lequel ledit premier ensemble de rouleaux est associé à une face extérieure de ladite première paroi horizontale (ISH1) et dans lequel ladite première paroi horizontale comporte des ouvertures rectangulaires à travers lesquelles lesdits rouleaux (R) du premier train de rouleaux (RTI1) font saillie.

3. Véhicule selon l'une quelconque des revendications précédentes, dans lequel ledit segment externe (ES) comprend une extrémité libre (ES1) comprenant un premier (RTE1) et un second train de rouleaux (RTE2) associés sur les faces internes de première et seconde parois horizontales (ISH1, ISH2) relatives.

4. Véhicule selon la revendication 3, dans lequel ladite extrémité libre comprend un collier de renforcement (ESC) adapté pour supporter lesdits premier et second ensembles de rouleaux.

5. Véhicule selon l'une quelconque des revendications précédentes, dans lequel chaque train de rouleaux (RTE1, RTE2, RTI1, RTI2) comprend une paire de plaques perforées (F) parallèles l'une à l'autre, perforées de manière à supporter des axes des rouleaux.

6. Véhicule selon l'une quelconque des revendications précédentes, dans lequel au moins un train de rouleaux est associé à un segment relatif, au moyen d'une entretoise (SP) capable d'ajuster des jeux.

7. Véhicule selon l'une quelconque des revendications précédentes, dans lequel au moins un train de rouleaux est associé à un segment relatif au moyen d'une articulation (HI) agencée de manière à permettre au train de rouleaux de s'incliner selon un axe (Y) parallèle à l'axe d'articulation (X) du bras télescopique.

8. Véhicule selon l'une quelconque des revendications précédentes, dans lequel lesdits trains de rouleaux sont associés à des parois horizontales des segments intérieur et extérieur, et dans lequel des plaquettes (ESP, ISP) sont associées à des parois verticales correspondantes des segments intérieur et extérieur.

9. Véhicule selon la revendication 8, dans lequel lesdites plaquettes sont associées auxdites parois verticales dans des sections transversales traversant au moins un train de rouleaux respectif.

10. Véhicule selon l'une quelconque des revendications précédentes, comprenant au moins un actionneur hydraulique permettant de commander une position réciproque entre au moins deux segments définissant le bras (A).
